# EUROPÄISCHE PATENTSCHRIFT

(11) **EP 0 967 701 B1**
(45) Veröffentlichungstag und Bekanntmachung des Hinweises auf die Patenterteilung: **27.12.2006**
(21) Anmeldenummer: 99106807.3
(22) Anmeldetag: 06.04.1999
(51) Int. Cl.: H02G 3/06, H02G 15/04

(54) **Anschlussarmatur mit einem durch Schlitze in Halterungen aufgeteilten Befestigungsvorsprung**
Connection device with fastening protusion divided by slots in holders
Dispositif de connexion avec protubérance de fixation divisée par des fentes au niveau des supports

(30) Priorität: 24.06.1998 DE 19828059
(43) Veröffentlichungstag der Anmeldung: 29.12.1999
(73) Patentinhaber: Anton Hummel Verwaltungs GmbH, 79183 Waldkirch (DE)
(72) Erfinder: Bartholomä, Mario, 79297 Winden (DE); Zügel, Fritz, 79183 Waldkirch (DE); Götz, Volker, 79341 Kenzingen (DE); Adolf, Jürgen, 79211 Denzlingen (DE)
(74) Vertreter: Patent- und Rechtsanwaltssozietät Maucher, Börjes & Kollegen

(56) Entgegenhaltungen:
- EP-A- 0 206 896
- WO-A-98/15764
- DE-C- 4 225 263
- DE-U- 29 701 321
- GB-A- 2 126 803

## Beschreibung

Die Erfindung betrifft eine Anschlußarmatur zum Befestigen von länglichen Körpern, beispielsweise von Kabeln, Schläuchen, Rohren, Wellschläuchen oder dergleichen, an einer Öffnung, insbesondere an einem Durchbruch oder einer Lochung in einer Wandung eines Gehäuses oder dergleichen, wobei die Anschlußarmatur einen in Einsteckrichtung axial vorstehenden Befestigungsvorsprung aufweist, der durch im wesentlichen in axialer Richtung verlaufende Schlitze in Haltezungen aufgeteilt ist, an deren Außenseite radial nach außen vorstehende Haltevorsprünge angeordnet sind, die beim Einschieben des Befestigungsvorsprunges und seiner Haltezungen in die Öffnung hinter deren Rand diesen hintergreifend in die Halteposition gelangen, wobei die Haltezungen an ihren Haltevorsprüngen in ihrem Anlagebereich eine sich in Einsteckrichtung erweiternde und demgemäß in Rückzugsrichtung verjüngende Form haben oder einen Konus bilden, so daß die Haltezungen bei einer Axialbewegung der Anschlußarmatur entgegen ihrer Einsteckrichtung in radialer Richtung verformbar sind und wobei mit Abstand zu den Haltevorsprüngen eine einen Anschlag aufweisende oder bildende Hülse angeordnet ist, die an dem dem hintergriffenen Rand der Öffnung gegenüberliegenden Öffnungsrand anliegt und zur Erzeugung einer Klemmkraft zwischen den Haltevorsprüngen und diesem Anschlag in axialer Richtung unter Verkleinerung des Abstandes zu den Haltevorsprüngen verschiebbar ist.

Eine derartige Anschlußarmatur ist aus der US-PS 1 902 229 bekannt. Dabei hat der Befestigungsvorsprung lediglich zwei einander gegenüberliegende Schlitze und in deren Bereich auch noch Abflachungen, weil die Anschlußarmatur aus Metall besteht. Die konischen Haltevorsprünge sind dabei gezahnt, um sich an dem hintergriffenen Lochungsrand eindrücken zu können. Dies bedeutet spätestens beim Fixieren dieser Anschlußarmatur eine Veränderung des Lochungsrandes, die vor allem bei einer Demontage hinderlich sein kann.

Darüber hinaus ist eine solche Anordnung ungeeignet für eine Anschlußarmatur, bei welcher der Befestigungsvorsprung in an sich gewünschter Weise aus Kunststoff besteht und zum Beispiel preiswert im Spritzgießverfahren in großen Stückzahlen hergestellt werden kann. Gerade bei einer solchen Kunststoff-Ausführung besteht umgekehrt die Gefahr, daß der Befestigungsvorsprung durch die Lochungsränder beschädigt wird und sich an eventuell nicht sehr genau gearbeiteten Lochungsrändern eindrückt und dadurch die beim Festlegen erforderliche Axialbewegung erschwert oder sogar so weit unterbunden wird, daß die durch eine Axialbewegung zu bewirkende Radialbewegung der Haltezungen behindert wird.

Es besteht deshalb die Aufgabe, eine Anschlußarmatur der eingangs genannten Art zu schaffen, die die Vorteile einer einfachen Montierbarkeit durch das Einschnappen des Befestigungsvorsprunges in einer Öffnung und der ebenso einfachen Verspannung eines länglichen Körpers durch eine axiale Rückzugbewegung beibehält, ohne durch den Lochungsrand beschädigt oder in den erforderlichen Bewegungen beeinträchtigt zu werden. Dabei soll es möglich sein, die Anschlußarmatur auch an einer Öffnung oder Lochung festzulegen, bei welcher der hintergriffene Rand ungenau oder sogar schartig ist.

Zur Lösung dieser scheinbar widersprüchlichen Aufgabe ist die eingangs definierte Anschlußarmatur dadurch gekennzeichnet, daß die den Anschlag aufweisende Hülse einen sich von dem Anschlag aus axial erstreckenden Stutzen aufweist, der in Montagestellung an der Außenseite der Haltezungen des Befestigungsvorsprunges zwischen diesem und der Innenwandung der hintergriffenen Öffnung verläuft und bei einer Axialbewegung des Befestigungsvorsprunges und seiner Haltezungen einen konischen oder sich verjüngenden Bereich dieser Haltezungen beaufschlagt und dadurch zu deren radialer Zusammendrückung dient.

Im Gegensatz zum Stand der Technik, wo die einen Anschlag bildende Hülse eine Überwurfmutter ist, die eine der Lochung oder Wandung zugewandte ringförmige ebene Stirnseite aufweist, ist bei der erfindungsgemäßen Lösung an dieser Stirnseite also ein Stutzen angeordnet, der in die Öffnung und somit in die Wandung eingreift, also diese Lochung innenseitig auskleidet. Dieser Stutzen wird nun dazu ausgenutzt, bei der Axialbewegung des Befestigungsvorsprunges entgegen der Einsteckrichtung die Haltezungen in deren konischem Bereich zu beaufschlagen und für deren radiale Zusammendrückung zu sorgen, so daß selbst beschädigte, schartige oder scharfe Ränder der Öffnung diese Haltezungen des Befestigungsvorsprunges nicht beschädigen und nicht an ihren Bewegungen hindern können. Somit kann in vorteilhafter Weise ein Werkstoff für den Befestigungsvorsprung und seine Haltezungen gewählt werden, der bestmöglich auf die gewünschten Verformungen beim Festlegen eines länglichen Körpers ausgerichtet ist und keine Rücksicht auf den Werkstoff der die Lochung aufweisenden Wandung nehmen muß. Somit kann ein gut flexibler und federnder Kunststoff Verwendung finden, jedoch ist auch eine Fertigung aus Metall denkbar. In vorteilhafter Weise kann die Anschlußarmatur also als einfache Steckarmatur in eine entsprechende Öffnung eingeführt und darin zunächst verrastet und anschließend ein in sie eingeführter länglicher Körper, zum Beispiel ein Kabel mit Zugentlastung, fixiert und verklemmt werden, indem die Anschlußarmatur entgegen der Einsteckrichtung zurückgezogen und dadurch der Befestigungsvorsprung radial zusammengedrückt wird, wobei die diese Radialbewegung erzeugende Druckkraft aber ganz oder zumindest teilweise durch den erfindungsgemäß vorgesehenen und sich in die Öffnung erstreckenden Stutzen aufgebracht wird, der eine entsprechend schonende Beaufschlagung des konischen oder sich verjüngenden Bereiches der Haltezungen erlaubt.

Für einen festen Sitz der Anschlußarmatur in Montagestellung innerhalb der Öffnung ist es vorteilhaft, wenn der Stutzen durch die von ihm radial zusammendrückbaren Haltezungen selbst radial aufweitbar und/oder in Montagestellung zumindest bereichsweise gegen die Innenwandung der Öffnung andrückbar ist. Dies ergibt dabei nicht nur einen festen Sitz, sondern auch eine gute Verdrehsicherheit, die vor allem dann vorteilhaft ist, wenn die den Anschlag aufweisende oder bildende Hülse für ihre Axialverstellung verschraubbar sein soll.

Dabei kann die radiale Aufweitbarkeit des Stutzens durch eine entsprechende Werkstoffwahl, vor allem aber dadurch unterstützt sein, daß der an der Anschlaghülse in axialer Richtung vorspringende und in Montagestellung in die Lochung eingreifende Stutzen durch axial verlaufende, insbesondere an der Stirnseite offene Schlitze in einzelne Gleitzungen aufgeteilt ist. Diese Gleitzungen können sich also bei dem Verspannen der Anschlußarmatur durch die Rückzugbewegung des Befestigungsvorsprunges sofort fest an die Innenseite der Öffnung oder Lochung andrücken und werden dadurch von der Außenseite her abgestützt. Somit ergibt sich eine feste Verklemmung der gesamten Anschlußarmatur in der Öffnung und gleichzeitig eine entsprechend starke Zugentlastung an dem länglichen Körper, beispielsweise an einem Kabel oder Schlauch.

Für eine einfache Montage und Fertigung ist besonders vorteilhaft, daß der Stutzen und/oder die ihn bildenden Gleitzungen außenseitig vorsprungfrei sein können. Entsprechend einfach kann der Stutzen in die Öffnung oder Lochung einer Wandung eingeführt werden. Darüber hinaus ist nach dem Lösen der Verspannung auch eine einfache Demontage möglich. Ferner wird die Fertigung einfacher gegenüber einer Anordnung, bei welcher außenliegende Zungen mit Vorsprüngen oder Vertiefungen versehen sein müssen.

Der Stutzen kann dabei in Vormontagestellung oder entspannter Lage innerhalb eines gedachten Hüllzylinders verlaufen. Somit entspricht er im wesentlichen den gängigen Innenkonturen von Öffnungen oder Lochungen in Gehäusewandungen und kann gut darin eingeführt und danach zumindest bereichsweise radial aufgeweitet werden, insbesondere dann, wenn er durch endseitig offene axiale Schlitze in einzelne Gleitzungen aufgeteilt ist.

Der an der Anschlaghülse befindliche Stutzen kann in Ausgangsstellung der Klemmbewegung bis an die Haltevorsprünge reichen und eine mit einer Schrägfläche der Haltevorsprünge zusammenwirkende Einführschräge aufweisen. Dadurch beginnt unmittelbar bei einer ersten axialen Rückzugbewegung des Befestigungsvorsprunges schon die entsprechende radiale Einwärtsbewegung der die Haltevorsprünge aufweisenden Haltezungen, die dabei durch die Einführschräge an dem Stutzen oder seinen Gleitzungen unterstützt wird. Vor allem kann durch diese Einführschräge auch die dabei auftretende Flächenpressung vermindert und ein größerer Widerstand durch Oberflächenrauhigkeit vermieden werden.

Der Stutzen kann eine axiale Abmessung haben, die der axialen Ausdehnung der von dem Befestigungsvorsprung durchsetzten Öffnung wenigstens zu einem über die Hälfte gehenden Bruchteil oder vollständig entspricht oder diese übertrifft. Der Stutzen kann also zumindest den größten Teil der Öffnung oder Lochung in Gebrauchsstellung auskleiden, für bestimmte Anwendungsfälle aber sogar innenseitig darüber hinausragen. Dies ist deshalb möglich, weil der Stutzen bei der Axialbewegung der Anschlußarmatur für ihre Festlegung auch die Radialbewegung der Haltezungen bewirkt, also diese Bewegungen von der Öffnung weitgehend unabhängig macht.

Gleichzeitig wird aber der Stutzen durch diese Betätigung in der Öffnung selbst verklemmt, so daß er auch die entsprechenden Reaktionskräfte auf die Haltezungen übertragen kann. In der Mehrzahl der Fälle wird man anstreben, daß der Stutzen und seine Gleitzungen den größten Teil der Innenseite der Öffnung auskleiden, jedoch kann bei einer Anwendung derselben Armatur an einer Wandung geringerer Dicke also die Festlegung auch dann erfolgen, wenn der Stutzen oder seine Gleitzungen den inneren Rand der dadurch in axialer Richtung geringer bemessenen Öffnung überragt.

Die Zahl der Schlitze an dem Stutzen kann der Zahl der Schlitze und der Haltezungen des Befestigungsvorsprunges entsprechen. Dies ergibt eine gute gegenseitige Beaufschlagung und Abstimmung der Verformungen beim Verklemmen der Anschlußarmatur.

Eine Ausgestaltung der Erfindung von erheblicher Bedeutung kann darin bestehen, daß die Schlitze des Stutzens und die Schlitze des Befestigungsvorsprunges in Montagestellung in Umfangsrichtung gegeneinander versetzt sind und daß an den Befestigungsvorsprüngen Führungselemente oder Führungsleisten oder dergleichen außenseitig aufgesetzt sind, die in Gebrauchsstellung in die Schlitze des Stutzens passen und zumindest bereichsweise eingreifen. Dadurch kann vermieden werden, daß während einer gegenseitigen Verspannung unter gleichzeitiger Durchführung einer Drehbewegung eine Relativverdrehung erfolgt, die die weitere Verspannung verhindert. Soll beispielsweise die Axialbewegung des Befestigungsstutzens entgegen einer ersten Einsteckrichtung mit Hilfe eines Gewindes bewirkt werden, muß eine Drehbewegung durchgeführt werden, der im Fortschritt der zunehmenden Verklemmung ein immer größerer Widerstand entgegengesetzt wird. Dabei bestünde unter Umständen die Gefahr einer relativen Verdrehung des Befestigungsvorsprunges gegenüber dem Stutzen, was durch die gegenseitige Verzahnung zwischen den Führungselementen oder Führungsleisten an den Befestigungsvorsprüngen einerseits und den Schlitzen des Stutzens andererseits verhindert wird. Somit erhalten die Schlitze des Stutzens eine zusätzliche Funktion, weil sie zwischen diesem Stutzen und dem Befestigungsvorsprung in Umfangsrichtung über die Führungselemente oder Führungsleisten Formschluß herstellen.

Eine Ausgestaltung der Erfindung, durch welche sichergestellt wird, daß die Haltezungen oder auch an ihnen außenseitig eventuell vorgesehene Führungsleisten nicht durch den hintergriffenen Rand der Öffnung beschädigt und in ihrer Bewegung von diesem Rand behindert werden, kann darin bestehen, daß der freie Rand des Stutzens oder der ihn bildenden Gleitzungen die Haltezungen und/oder die Führungsleisten außenseitig derart beaufschlagt und in radialer Richtung festlegt, daß der Außenumfang im Bereich des zu hintergreifenden oder hintergriffenen Randes der Öffnung gleich oder insbesondere - bevorzugt - etwas kleiner als der Umfang dieses Randes ist und daß der Schrägungswinkel der Haltezungen im Bereich des Stutzens und/oder der Einführschräge an diesem Stutzen einen derartigen Winkel haben, daß bei der Axialbewegung des Befestigungsvorsprunges in Richtung auf diese Öffnung hin - also entgegen seiner ursprünglichen Einsteckrichtung - die radiale Zusammendrückung der Haltezungen zu groß ist, daß die weiterhin an dem hintergriffenen Rand der Öffnung berührungsfrei oder zumindest im wesentlichen reibungsfrei bleiben. Es wird also durch die Wahl der Schrägflächen an den Haltevorsprüngen der Haltezungen bzw. an dem Stutzen dafür gesorgt, daß nicht nur zu Beginn der Klemmbewegung, sondern auch in deren weiterem Verlauf, in welchem die Haltezungen mehr und mehr wieder in die Öffnung gezogen werden, damit die außenseitig an ihnen vorgesehenen Schrägflächen im Sinne einer radialen Verformung wirksam werden können, nicht mit dem hintergriffenen Rand der Öffnung in eine solche Berührung gelangen, die zu einer Verhakung oder Beschädigung führen könnte. Vielmehr wird vor allem angestrebt, daß auch dabei eine direkte Berührung zwischen den Haltezungen bzw. Haltevorsprüngen und der Öffnung oder ihrem Öffnungsrand vermieden wird.

Für eine Axialbewegung des Befestigungsvorsprunges ohne eine relative Verdrehung der den Anschlag aufweisenden Hülse und damit des in die Öffnung eingreifenden Stutzens ist es zweckmäßig, wenn die Anschlußarmatur an ihrem dem Befestigungsvorsprung abgewandten Bereich oder Rand ein radial vorstehendes Widerlager oder einen Bund aufweist, der ein Widerlager für ein Verschiebeelement bildet, das zwischen diesem Bund und dem Anschlag der Anschlaghülse angeordnet ist und den Anschlag und diesen Bund in axialer Richtung auseinanderdrückt. Durch ein Auseinanderdrücken des Anschlages einerseits und des Widerlagers oder Bundes andererseits wird der Anschlag gegen eine die Lochung aufweisende Wandung gedrückt und gleichzeitig der übrige Teil der Anschlußarmatur entgegen der Einsteckrichtung zurückgezogen, was die gewünschte Axialbewegung im Bereich des Befestigungsvorsprunges ergibt, durch welche die radiale Zusammendrückung der Haltezungen bewirkt wird. Dabei können unterschiedliche Mittel zum Auseinanderbewegen des Anschlages und des Widerlagers oder Bundes Anwendung finden.

Zweckmäßig kann es sein, wenn das Spannelement zwischen Bund und Anschlag eine Feder, insbesondere eine Druckfeder, oder - für eine in vielen Fällen zu bevorzugende gezielte bzw. anpaßbare Klemmkraft - eine mit einem Außengewinde an der Anschlaghülse zusammenwirkende, zum Spannen von dem Anschlag weg verdrehbare Gewindehülse ist.

Im ersteren Falle muß der Benutzer beim Einsetzen der Anschlußarmatur in die Öffnung gleichzeitig die Druckfeder zusammendrücken und erreicht dann die gewünschte Verklemmung durch Loslassen, was zu einer automatischen Verklemmung führt, die aber durch die Kraft der Druckfeder vorgegeben und somit auch begrenzt ist. Im zweiten Falle kann er die Gewindehülse verschrauben, wodurch sie auf der Anschlaghülse axial von deren Anschlag wegbewegt wird, so daß die aus Anschlaghülse und Gewindehülse bestehende Einheit eine zunehmende axiale Abmessung erhält. Auch dies führt dann zu der gewünschten Spannung, weil der Bund oder das Widerlager an der Anschlußarmatur dadurch von der Öffnung wegbewegt wird, was automatisch das teilweise Einziehen des Befestigungsvorsprunges in die von diesem Befestigungsvorsprung hintergriffene Öffnung mit der daraus resultierenden radialen Verformung der Haltezungen zur Folge hat. Dabei hat es der Benutzer durch mehr oder weniger starke Verdrehung der Gewindehülse in der Hand, wie stark die Verklemmung sein soll bzw. wie weit die radiale Verformung der den Befestigungsvorsprung bildenden Haltezungen gehen soll. Diese Lösung erlaubt also auch eine bessere Anpassung an unterschiedlich bemessene längliche Körper. Gerade bei einer solchen Lösung ist besonders vorteilhaft, wenn die Anschlaghülse mit dem in die Lochung eingreifenden Stutzen und der Befestigungsvorsprung der Anschlußarmatur gegen ein gegenseitiges Verdrehen gesichert sind; schon nach einer kurzen Verspannbewegung wird nämlich der Stutzen innerhalb der Öffnung verklemmt, so daß auch die zunehmende Verdrehung der Gewindehülse mit immer stärker werdendem Drehmoment auch auf die Anschlaghülse diese nicht mehr in Drehrichtung mitnehmen kann. Ferner kann die an dem Widerlager oder Bund auftretende Reibung durch die Gewindehülse diesen ebenfalls nicht in Drehrichtung mitnehmen.

Der Anschlagbund und der Befestigungsvorsprung mit den Haltezungen und Haltevorsprüngen sowie gegebenenfalls an diesen angeordneten Führungsleisten kann einstückig sein und insbesondere aus Kunststoff bestehen. Dies ergibt eine preiswerte Herstellung aus einem Werkstoff, der federelastisch ist, also eine entsprechende Axialbewegung der Haltezungen über deren schräge oder konische Gestaltung in eine Radialbewegung übersetzen kann. Gleichzeitig kann eine Rückfederung bei einer Montage erfolgen. Denkbar wäre aber auch eine Fertigung aus Metall.

Der Befestigungsvorsprung kann stirnseitig nach innen greifenden Klauen oder dergleichen Halteelemente zum Erfassen des länglichen Körpers und/oder zum Abstützen einer innenliegenden Dichtung aufweisen. Somit kann eine solche innenliegende Dichtung an ihrer Stirnseite übergriffen und beim Verklemmen an den länglichen Körper außenseitig angepreßt werden.

In den Anschlag, von welchem der Stutzen ausgeht, kann mit radialem Abstand zu diesem Stutzen ein elastischer Ring, Dichtring oder O-Ring angeordnet oder mit einem Teil seines Querschnittes in eine Ringnut oder dergleichen Vertiefung eingefügt sein, der dabei einen größeren Durchmesser als der Stutzen hat, also zweckmäßigerweise konzentrisch zu diesem umläuft. Somit kann auch im Anschlagbereich eine Abdichtung und eine gewisse elastische Anpressung erfolgen, die zusätzlich einer Verdrehung der den Anschlag aufweisenden Hülse entgegenwirkt, wenn für die Verklemmung eine relativ zu dieser Hülse erfolgende Verschraubung durchgeführt wird.

Insgesamt ergibt sich vor allem bei Kombination einzelner oder mehrerer der vorbeschriebenen Merkmale und Maßnahmen eine Anschlußarmatur, die auf einfache Weise durch Einstecken in eine Öffnung montiert werden kann, wobei innerhalb der Öffnung ein Gleitlager gebildet wird, das bei der Verklemmung gegen die Innenseite der Öffnung in der Gehäusewandung angedrückt wird und dadurch einen Widerstand gegen eine Verdrehung bewirkt, falls die Verspannung ihrerseits durch eine Drehbewegung und ein Gewinde erfolgt. Dabei kann diese Wirkung durch einen an dem Anschlag befindlichen Dicht- oder O-Ring verstärkt werden. Zusätzliche Führungselemente oder Führungsleisten auf den Außenseiten der als Klemmelemente dienenden Haltezungen können dabei in axialer Richtung in die Schlitze des das Gleitlager bildenden Stutzens geführt werden, wodurch ein Verdrehen auch des Befestigungsvorsprunges und damit der gesamten Anschlußarmatur vermieden wird. Der als Widerlager dienende Bund an der Anschlußarmatur kann dabei bei einer solchen Verspannung oder auch beim Lösen dieser Verspannung durch eine Gewindehülse festgehalten werden, bis die entsprechende Verklemmung innerhalb der Öffnung errreicht ist.

Ein unmittelbar an der Anschlußarmatur vorhandenes Gewinde für eine Überwurfmutter wird also vermieden. Dennoch kann ein Ausgleich unterschiedlicher Dicken oder Stärken der die Öffnung aufweisenden Wandung erfolgen. Bei einer Lösung mit einer verdrehbaren Gewindehülse zum Erzeugen der Spannkraft steht ein Haltegriff zur Verfügung. Gleichzeitig können alle Einzelteile unverlierbar miteinander verbunden sein und ein spezielles Montagewerkzeug wird vermieden. Ferner ist vor allem der konische Bereich, durch den die radiale Verklemmung und die Zugentlastung bewirkt wird, einstückig mit der eigentlichen Anschlußarmatur und dem Teil der Anschlußarmatur verbunden, der das Widerlager oder den Bund aufweist. Dies ergibt eine entsprechend stabile Anschlußarmatur.

Nachstehend sind Ausführungsbeispiele der Erfindung anhand der Zeichnung näher beschrieben. Es zeigt in zum Teil schematisierter Darstellung:

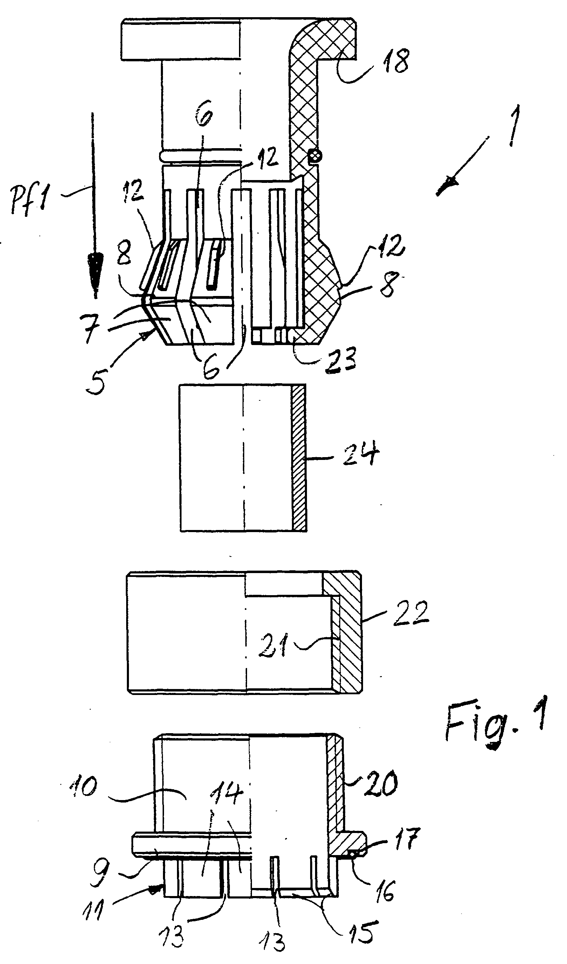

- Fig.1: eine teilweise im Längsschnitt, teilweise in Seitenansicht gehaltene Explosionsansicht einer Ausführungsform der erfindungsgemäßen Anschlußarmatur, bei welcher eine den Anschlag bildende oder aufweisende Hülse ein Außengewinde zum Zusammenwirken mit einer demgegenüber verdrehbaren Gewindehülse hat, so daß die axiale Ausdehnung der Anschlaghülse und der Gewindehülse stufenlos verstellbar und dadurch die Gewindehülse gegen einen als Widerlager dienenden Bund zum Verspannen andrückbar ist,

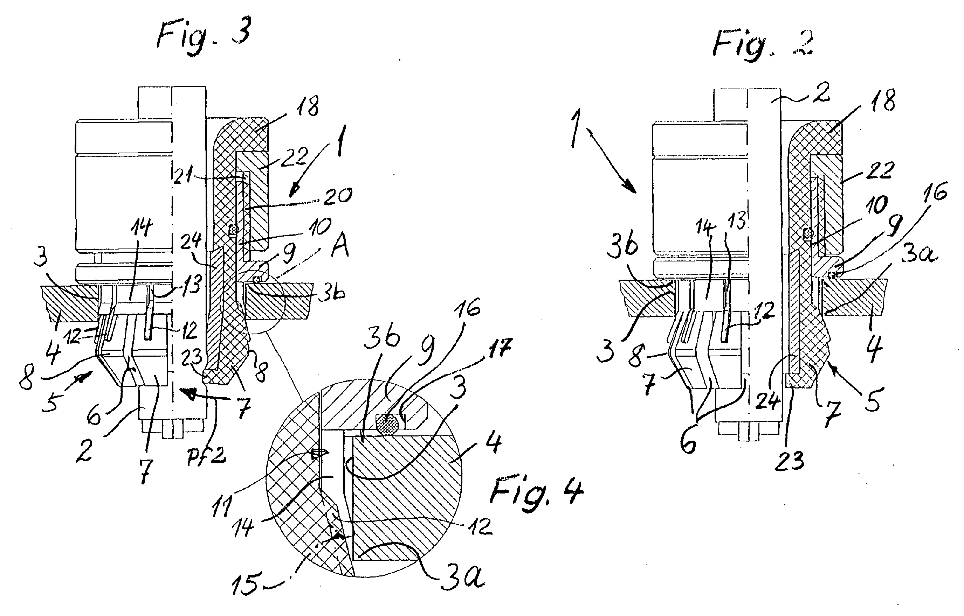

- Fig.2: die Anschlußarmatur nach Fig.1 in Vormontagestellung, das heißt nach dem Einsetzen in eine Lochung einer Wandung, jedoch vor dem Befestigen,
- Fig.3: eine der Fig.2 entsprechende Darstellung nach dem Verstellen der Gewindehülse gegenüber der Anschlaghülse in axialer Richtung zur Vergrößerung der Gesamtabmessung und dadurch zur Verspannung der Anschlußarmatur in der Lochung einerseits und gegenüber einem länglichen Körper oder Kabel andererseits,

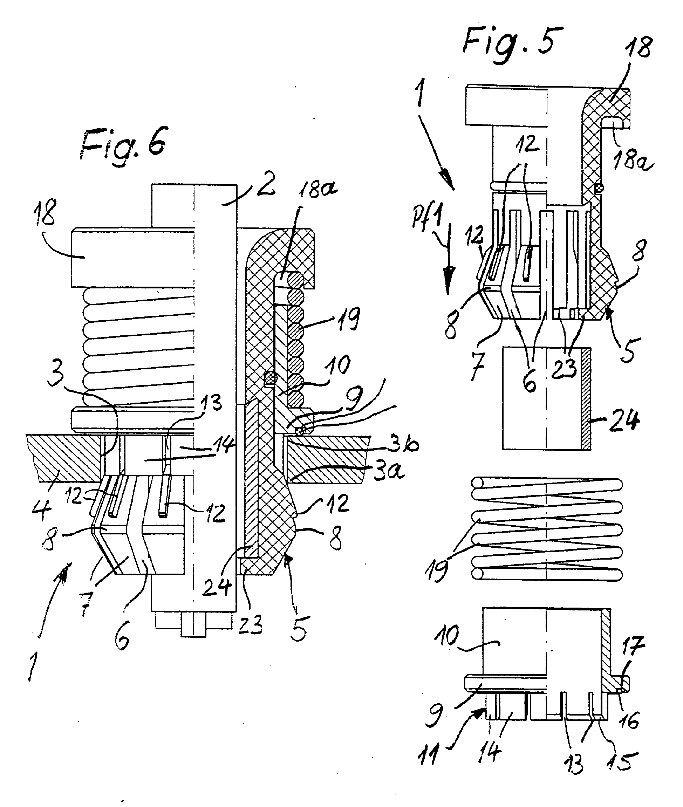

- Fig.4: in vergrößertem Maßstab die in Fig.3 durch den Kreis A markierte Einzelheit und dabei insbesondere die Verklemmung eines an der Anschlaghülse befindlichen Stutzens an der Innenseite der Öffnung, wobei dennoch die Außenseite einer Haltezunge und eines auf dieser befindlichen Führungselementes von dem hintergriffenen Rand der Lochung beabstandet bleibt,
- Fig.5: eine teilweise im Längsschnitt, teilweise in Ansicht gehaltene Explosionsdarstellung einer abgewandelten Ausführungsform der Anschlußarmatur, bei welcher die Axialbewegung zur Durchführung der Verspannung mittels einer Druckfeder zwischen Anschlaghülse und Bund oder Widerlager an der Anschlußarmatur bewirkt werden soll, sowie
- Fig.6: die Ausführungsform gem. Fig.5 in einer der Fig.2 entsprechenden, teils im Längsschnitt, teils in Seitenansicht gehaltenen Vormontagestellung nach dem Einsetzen in eine Öffnung oder Lochung einer Wandung aber vor dem Verklemmen mit der Lochung und mit dem länglichen Körper.

Bei der nachfolgenden Beschreibung unterschiedlicher Ausführungsbeispiele einer im ganzen mit 1 bezeichneten Anschlußarmatur erhalten hinsichtlich ihrer Funktion übereinstimmende Teile dieselben Bezugszahlen, auch wenn sie abweichend gestaltet sind.

Die Anschlußarmatur 1 dient zum Befestigen von länglichen Körpern, in den dargestellten Ausführungsbeispielen von Kabeln 2, aber auch von Schläuchen, Rohren, Wellschläuchen oder dergleichen an einer Öffnung 3, die vor allem eine Lochung oder ein Durchbruch in einer Wandung 4 eines Gehäuses oder dergleichen sein kann. Die Anordnung der Anschlußarmatur 1 relativ zu einer solchen Öffnung 3 und einer Wandung 4 erkennt man in den Figuren 2 bis 4 und 6.

In beiden Ausführungsbeispielen erkennt man insbesondere auch in den Figuren 1 und 5, daß die Anschlußarmatur 1 einen in Einsteckrichtung gemäß dem Pfeil Pf1 axial vorstehenden Befestigungsvorsprung 5 aufweist, der durch in axialer Richtung verlaufende Schlitze 6 in Haltezungen 7 aufgeteilt ist, an deren Außenseite radial nach außen vorstehende Haltevorsprünge 8 angeordnet sind, die beim Einschieben des Befestigungsvorsprunges 5 und seiner Haltezungen 7 in die Öffnung 3 hinter deren Rand 3a, diesen hintergreifend, in die Halteposition gemäß den Figuren 2 bis 4 und 6 gelangen.

Die Haltezungen 7 haben dabei an ihren Haltevorsprüngen 8 in ihrem Anlagebereich, also dem Bereich, der in Gebrauchsstellung nahe dem Rand 3a zu liegen kommt, eine sich in Einsteckrichtung gemäß dem Pfeil Pf1 erweiternde und demgemäß in der - entgegengesetzten - Rückzugsrichtung verjüngende Form und bilden etwa einen Konus. Dies führt dazu, daß die Haltezungen 7 bei einer Axialbewegung der Anschlußarmatur entgegen ihrer Einsteckrichtung, also aus ihrer in Fig.2 und 6 dargestellten Position in eine Lage gemäß Fig.3 und 4, in radialer Richtung verformbar sind. Mit Abstand zu diesen Haltevorsprüngen 8 ist eine einen Anschlag 9 aufweisende oder bildende Hülse 10, im folgenden auch "Anschlaghülse 10" genannt, angeordnet, die an dem dem hintergriffenen Rand 3a der Öffnung 3 gegenüberliegenden, in der Regel also äußeren, Öffnungsrand 3b in Montagestellung anliegt und zur Erzeugung einer Klemmkraft zwischen den Haltevorsprüngen 8 und dem Anschlag 9 in axialer Richtung unter Verkleinerung des Abstandes zu den Haltevorsprüngen 8 verschiebbar ist, woraus die radiale Verformung der die Haltevorsprünge 8 aufweisenden Haltezungen 7 in die in Fig.3 und 4 dargestellte Lage resultiert.

Die den aufweisende Hülse 10 weist dabei in beiden Ausführungsbeispielen einen sich von dem Anschlag 9 aus axial erstreckenden Stutzen 11 auf (Fig. 1 und 5), der in Montagestellung an der Außenseite der Haltezungen 7 des Befestigungsvorsprunges 5 zwischen diesem und der Innenwandung der hintergriffenen Öffnung 3 verläuft und zu liegen kommt und bei einer Axialbewegung des Befestigungsvorsprunges 5 und seiner Haltezungen 7 einen konischen oder sich verjüngenden Bereich dieser Haltezungen 7, also den entsprechend konisch gestalteten Haltevorsprung 8 der Haltezungen 7 beaufschlagt und dadurch zu der radialen Verformung und Zusammendrückung bei der entsprechenden Relativbewegung dient. Es wird also nicht der hintergriffene Lochungsrand 3a selbst unmittelbar dazu verwendet, um die Axialbewegung des Befestigungsvorsprunges 5 entgegen der Einsteckrichtung in eine radiale Verformung der Haltezungen 7 umzusetzen, sondern dies geschieht mit Hilfe des Stutzens 11, so daß selbst scharfkantige oder zerklüftete oder schartige Ränder 3a keine Beschädigungen an der Außenseite der Haltezungen 7 und auch keine gegenseitige ungewollte Verzahnung an dieser Stelle bewirken können. Somit wird die Axialbewegung zum Herstellen der Verklemmung auch nicht durch einen solchen scharfkantigen, sich eventuell in die Außenseite der Haltezunge 7 bzw. ihres Haltevorsprunges 8 eingrabenden Rand behindert. Vielmehr schirmt der Stutzen 11 die jeweilige Haltezunge 7 gegenüber der Öffnung 3 und insbesondere auch ihrem innenliegenden Rand 3a ab.

Dabei wird vor allem anhand der Fig.4 deutlich, daß der Stutzen 11 durch die von ihm radial zusammendrückbaren Haltezungen 7 selbst radial aufweitbar und in Montagestellung zumindest bereichsweise gegen die Innenwandung der Öffnung 3 andrückbar ist. Dabei sei an dieser Stelle erwähnt, daß der in Fig.4 teilweise sichtbare Stutzen 11 in diesem Falle noch durch ein vom Betrachter aus gesehen vor ihm liegendes, im folgenden noch zu beschreibendes Führungselement bzw. eine Führungsleiste 12 teilweise verdeckt ist, also über seine gesamte axiale Erstreckung im wesentlichen eine gleichbleibende radiale Dicke hat.

Vor allem in Fig.1 und 5, aber auch in den Figuren 2, 3 und 6 erkennt man dabei, daß in diesen Ausführungsbeispielen der an der Anschlaghülse 10 in axialer Richtung vorspringende und in Montagestellung in die Öffnung 3 eingreifende Stutzen 11 durch axial verlaufende, an seiner Stirnseite offene Schlitze 13 in einzelne Gleitzungen 14 aufgeteilt ist. Der Stutzen 11 und somit auch die ihn bildenden Gleitzungen 14 sind dabei außenseitig vorsprungfrei, also im wesentlichen glatt und können entsprechend leicht zusammen mit der gesamten Anschlußarmatur 1 in die Öffnung 3 eingeführt werden. Der Stutzen 11 hat dabei in Vormontagestellung oder entspannter Lage gemäß den Figuren 1 und 5 eine etwa zylindrische Form, könnte also innerhalb eines gedachten Hüllzylinders verlaufen. Somit ist seine Außenseite weitgehend an die Innenseite einer Öffnung 3 angepaßt, die in der Regel ebenfalls zylindrisch gestaltet ist. In Gebrauchsstellung hat er dabei gemäß den Figuren 2 bis 4 und 6 sogar gegenüber der Innenwand der Öffnung 3 noch etwas Luft oder Spiel.

Gemäß Fig.2 und 5 reicht der an der Anschlaghülse 10 befindliche Stutzen 11 schon in Ausgangsstellung der Klemmbewegung bis an die Haltevorsprünge 8 heran, so daß die relative Axialbewegung sofort auch in eine entsprechende radiale Verschwenkung der die Haltevorsprünge 8 aufweisenden Haltezungen 7 umgesetzt wird. Darüber hinaus weist er eine mit einer Schrägfläche dieser Haltevorsprünge 8 zusammenwirkende Einführschräge 15 auf, die in Fig.4 durch eine unterbrochene Linie hinter der schon erwähnten Führungsleiste 12 und im übrigen vor allem in den Figuren 1 und 5 sichtbar gemacht ist. Dies führt zu einer gleichmäßigen Einführung der Haltevorsprünge 8 und damit der Haltezungen 7 in den Stutzen 11, was die gegenseitige axiale Bewegung zur Herbeiführung der radialen Verschwenkung der Haltezungen 7 gemäß dem Pfeil Pf2 in Fig.3 erleichtert, selbst wenn der Schrägungswinkel an der Außenseite der Haltevorsprünge 8 von dem der Einführschräge 15 in der in Fig.4 erkennbaren Weise abweicht, also zwischen der Einführschräge 15 und der Außenseite der Haltevorsprünge 8 zumindest in Gebrauchsstellung noch ein Winkelraum verbleibt.

Die axiale Abmessung des Stutzens 11, also die Abmessung von dem Anschlag 9 bis zum freien stirnseitigen Rand des Stutzens 11, ist dabei im Ausführungsbeispiel geringer als die axiale Ausdehnung der von dem Befestigungsvorsprung 5 durchsetzten Öffnung 3, also etwas geringer als die Dicke der die Öffnung 3 aufweisenden Wandung 4 und entspricht somit nur einem Bruchteil dieser Wanddicke bzw. axialen Ausdehnung der Öffnung 3. Dabei übertrifft diese axiale Ausdehnung des Stutzens 11 allerdings die Hälfte der axialen Ausdehnung der Öffnung 3, so daß der größte Teil der Öffnung 3 durch den Stutzen 11 und dessen Gleitzungen 14 in Gebrauchsstellung ausgekleidet wird. Wenn dabei der Bereich des hintergriffenen Randes 3a der Öffnung 3 von dem Stutzen 11 freigelassen, also nicht ausgekleidet ist, hat dies dennoch keinen Einfluß darauf, daß die Außenseite der Haltevorsprünge 8 und auch die Führungselemente oder Führungsleisten 12 von diesem hintergriffenen Rand 3a auf - geringfügigen - Abstand gehalten werden. Die radiale Dicke des Stutzens 11 bzw. der Gleitzungen 14 und die Schrägung der Außenseite der Haltevorsprünge 8 sind so abgestimmt, daß selbst in der Montagestellung gemäß Fig.3 und 4 keine Berührung zwischen dem hintergriffenen Rand 3a und den Haltevorsprüngen 8 und den Führungsleisten 12 auftritt, also trotz der in axialer Richtung wirkenden Kraft keine Einprägungen oder Beschädigungen durch den unter Umständen scharfkantigen Rand 3a verursacht werden können.

Selbstverständlich könnte allerdings der Stutzen 11 auch die gesamte Öffnung 3 innenseitig auskleiden oder eventuell sogar noch etwas über den Rand 3a überstehen. Dazu würde es zum Beispiel kommen, wenn die Anschlußarmatur 1 gemäß den Figuren 1 bis 6 in der dargestellten Abmessung an einer Öffnung 3 angebracht würde, die eine Wand 4 geringerer Dicke durchsetzt.

Die Zahl der Schlitze 13 in dem Stutzen 11 und die Zahl der Schlitze 6 sowie der Haltezungen 7 an dem Befestigungsvorsprung 5 sind im Ausführungsbeispiel gleich. Dabei sind jedoch gemäß Fig.2, 3 und 6 die Schlitze 13 des Stutzens 11 und die Schlitze 6 des Befestigungsvorsprunges 5 in Montagestellung in Umfangsrichtung gegeneinander - um eine halbe Teilung - versetzt. Somit wird ein Schlitz 6 an dem Befestigungsvorsprung 5 zumindest innerhalb der Öffnung 3 durch eine Gleitzunge 14 außenseitig überdeckt, während umgekehrt ein Schlitz 13 des Stutzens 11 innenseitig von einer Haltezunge 7 zumindest über einen ersten axialen Teilbereich überdeckt wird.

Dadurch ist eine weitere zweckmäßige Ausgestaltung möglich, die in beiden Ausführungsbeispielen vorgesehen ist und darin besteht, daß an den Befestigungsvorsprüngen 8 und somit den Außenseiten der Haltezungen 7 an deren dem Rand 3a der Öffnung 3 zugewandten Schrägfläche die schon erwähnten Führungselemente oder Führungsleisten 12 außenseitig angeordnet sein können, die in Gebrauchsstellung in die Schlitze 13 des Stutzens 11 passen und bereichsweise eingreifen und dadurch in Drehrichtung Formschluß herstellen. Dadurch wird erreicht, daß beim Verspannen und Verklemmen der Anschlußarmatur 1 durch das Andrücken des Stutzens 11 und seiner Gleitzungen 14 im Inneren der Öffnung 3 nicht nur dieser, sondern auch die gesamte Anschlußarmatur 1 unverdrehbar gemacht wird. Je stärker die Verklemmung wird, um so weniger kann die gesamte Anschlußarmatur 1 verdreht werden, weil die Anschlaghülse 10 über den Stutzen 11 in der Öffnung 3 festgeklemmt und die Haltezungen 7 mit ihren Haltevorsprüngen 8 nicht nur innenseitig in dem Stutzen 11 an den Gleitzungen 14 ihrerseits reibschlüssig, sondern zusätzlich über die Führungselemente 12 formschlüssig gekuppelt wird.

Zusätzlich ist in den Anschlag 9, von welchem der Stutzen 11 ausgeht, mit radialem Abstand zu diesem Stutzen 9 ein elastischer Ring oder Dichtring, im Ausführungsbeispiel ein O-Ring 16 angeordnet, der mit einem Teil seines Querschnittes in eine Ringnut 17 oder ähnliche Vertiefung eingefügt ist und beim Verklemmen der Anschlußarmatur 1 etwas zusammengedrückt werden kann, dadurch aber gleichzeitig auch die Reibung zwischen dem Anschlag 9 und der Wandung 4 vergrößert. Dies trägt also zur Sicherung gegen Verdrehen der gesamten Anschlußarmatur 1 bei, so daß diese auch Kräfte oder Momente in Drehrichtung aufnehmen kann, die beispielsweise bei der Ausführungsform gemäß den Figuren 1 bis 3 beim Anziehen eines Gewindes zum Verspannen und Verklemen auftreten können, was nachfolgend noch näher beschrieben wird.

Dabei erfolgt diese Festlegung auch in Drehrichtung, obwohl der dem Anschlag 9 abgewandte freie Rand des Stutzens 11 und der ihn bildenden Gleitzungen 14 die Haltezungen 7 und auch die Führungsleisten 12 außenseitig derart beaufschlagen und in radialer Richtung festlegen, daß deren Außenumfang im Bereich des zu hintergreifenden oder hintergriffenen Randes 3a der Öffnung 3 im Ausführungsbeispiel kleiner, gegebenenfalls aber auch gerade noch gleich dem Umfang dieses Randes 3a ist und obwohl der Schrägungswinkel an der Außenseite der Haltezungen 7 und Haltevorsprünge 8 im Bereich des Stutzens 11 und von dessen Einführschräge 15 einen derartigen Winkel haben, daß bei der Axialbewegung des Befestigungsvorsprunges 5 in Richtung auf die Öffnung 3 hin, also entgegen der durch den Pfeil Pf1 angedeuteten Einsteckrichtung, die radiale Zusammendrückung der Haltezungen 7 so groß ist, daß sie weiterhin an dem hintergriffenen Rand 3a der Öffnung 3 berührungsfrei oder zumindest im wesentlichen reibungsfrei bleiben.

Die Reibung wird vielmehr innerhalb der Öffnung 3 zwischen dieser und der Außenseite des Stutzens 11 einerseits und zwischen der Innenseite des Stutzens 11 und der Außenseite der Haltezungen 7 bzw. der Haltevorsprünge 8 erzeugt, wobei zusätzlich noch eine Verdrehsicherung mit den Führungselementen 12 zur Verfügung steht. Somit erfolgt eine sichere und stabile Festlegung an der Öffnung 3, obwohl in scheinbar widersprüchlicher Weise die die Öffnung 3 an deren innenliegendem Rand 3a hintergreifenden Bereiche der Haltezungen 7 den hintergriffenen Rand 3a nicht oder kaum berühren.

Um die Axialkraft entgegen der Einsteckrichtung, also entgegengesetzt zu dem Pfeil Pf1 an der Anschlußarmatur aufzubringen, weist sie an ihrem dem Befestigungsvorsprung 5 abgewandten Bereich oder Rand in beiden Ausführungsbeispielen ein radial vorstehendes Widerlager in Form eines ringförmigen Bundes 18 auf, der ein Widerlager für ein jeweils etwas unterschiedlich gestaltetes Verschiebe- oder Spannelement bildet, welches zwischen diesem Bund 18 und dem Anschlag 9 der Anschlaghülse 10 angeordnet ist und den Anschlag 9 und diesen Bund 18 in axialer Richtung auseinanderdrückt. Wird durch ein solches noch näher zu erläuterndes Verschiebeelement der Abstand zwischen dem Bund 18 und dem Anschlag 9 vergrößert, bedeutet dies automatisch eine Verringerung des Abstandes des Anschlages 9 von den Haltevorsprüngen 8 der Haltezungen 7 des Befestigungsvorsprunges 5 und damit deren Verklemmung und radiale Verschwenkung, weil dann der freie Rand des Stutzens 11 weiter auf die schrägen Haltevorsprünge 8 geschoben bzw. umgekehrt diese Haltevorsprünge 8 in den Stutzen 11 hineingezogen und aufgrund ihrer außenseitigen Schräge gleichzeitig radial nach innen verschwenkt werden.

Das Verschiebe- oder Spannelement zwischen Bund 18 und Anschlag 9 ist im Ausführungsbeispiel gemäß den Figuren 5 und 6 eine Feder und zwar eine Druckfeder 19, die in zusammengedrücktem Zustand das Einführen des Befestigungsvorsprunges 5 in die Öffnung 3 erlaubt, weil der Abstand zwischen Anschlag 9 und den Haltevorsprüngen 8 noch entsprechend groß ist, während das Entspannen dieser Druckfeder 19 in dem Sinne wirkt, daß der Anschlag 9 und der Bund 18 auseinandergedrückt werden, so daß nach einem Freigeben der Federkraft der Druckfeder 19 die vorstehend schon beschriebene Verspannung und Verklemmung der Anschlußarmatur 1 erfolgt.

Fig.6 zeigt dabei die noch nicht verspannte und verklemmte Anordnung, bei welcher die Druckfeder 19 ihrerseits noch zusammengedrückt ist, wobei leicht vorstellbar ist, daß bei einer entsprechenden Freigabe der Druckfeder, wenn diese also in eine Form entspannt wird, wie man sie in Fig.5 erkennt, die Verspannung und Verklemmung in zu Fig.3 vergleichbarer Weise erfolgt.

Fig.6 zeigt also einen Zustand, bei welchem der Benutzer beispielsweise an dem Bund 18 angreift und diesen in Richtung auf die Wandung 4 niedergedrückt hält. Läßt er ihn los, wird die Anschlußarmatur 1 durch die Druckfeder 19 in axialer Richtung entgegen der durch den Pfeil Pf1 angedeuteten Einsteckrichtung zurückbewegt und dadurch an ihrem Befestigungsvorsprung 5 verklemmt, wodurch gleichzeitig die Haltezungen 7 analog der Anordnung der Fig.3 radial gemäß dem Pfeil Pf2 nach innen verschwenkt und gegen den länglichen Körper, also das Kabel 2 gedrückt oder sogar in dessen Oberfläche etwas eingedrückt werden.

Im Ausführungsbeispiel gemäß den Figuren 1 bis 3 ist das Spannelement eine mit einem Außengewinde 20 an der Anschlaghülse 10 zusammenwirkende, zum Spannen von dem Anschlag 9 weg verdrehbare, ein Innengewinde 21 aufweisende Gewindehülse 22. Während diese Anordnung in Fig.2 in schon in die Öffnung 3 eingesetzter, aber noch unverspannter Lage dargestellt ist, zeigt Figur 3, wie die Gewindehülse 22 durch einige Umdrehungen aufgrund der zusammenwirkenden Gewinde 20 und 21 in axialer Richtung so verstellt ist, daß die aus dieser Gewindehülse 22 und der Anschlaghülse 10 bestehende Einheit eine größere axiale Länge erhält, was dazu führt, daß der als Widerlager dienende Bund 18 einen größeren Abstand von der Außenseite der Wandung 4 erhält. Dies kann nur dadurch ausgeglichen werden, daß - wie beim Ausführungsbeispiel gemäß den Figuren 5 und 6 - der Befestigungsvorsprung 5 mit seinen Haltezungen 7 und den daran vorgesehenen, außenseitig schrägen Haltevorsprüngen 8 wieder in die Öffnung 3 und damit in den Stutzen 11 der Anschlaghülse 10 hineingezogen wird, was aufgrund der Abmessungen und der Schrägflächen zu der schon mehrfach erwähnten radialen Verschwenkung der Haltezungen 7 in Richtung des Pfeiles Pf2 und gegen die Oberfläche des Kabels 2 führt.

Wenn dabei - in beiden Ausführungsbeispielen - die Anschlußarmatur 1 aus einem elastischen Werkstoff, insbesondere Kunststoff, besteht, kann bei umgekehrter Bewegung der beteiligten Elemente und Teile die Anschlußarmatur 1 auch wieder gelöst werden, weil bei einem Verkürzen des Abstandes zwischen Anschlag 9 und Bund 18 dann die gesamte Anschlußarmatur 1 auch wieder etwas in Richtung des Pfeiles Pf1 bewegt werden kann, so daß die Haltezungen 7 aufgrund ihrer Elastizität wieder von dem Kabel 2 wegverschwenkt werden, so daß es herausgezogen und danach auch die gesamte Anschlußarmatur 1 wieder aus der Öffnung 3 zurückgezogen werden können.

Dabei bestehen der Anschlagbund 18 und der Befestigungsvorsprung 5 mit den Haltezungen 7 und den Haltevorsprüngen 8 sowie auch den Führungsleisten 12 in beiden Ausführungsbeispielen einstückig aus demselben Werkstoff, insbesondere aus Kunststoff.

Der als Widerlager dienende Bund 18 ist in den beiden Ausführungsbeispielen etwas unterschiedlich gestaltet. Zum Erfassen des einen Randes oder Endes der Druckfeder 19 hat der Bund 18 des Ausführungsbeispieles nach Fig.5 und 6 eine Ringnut 18a, während er im Ausführungsbeispiel gemäß 1 bis 3 radial verläuft und eben und glatt ist, so daß die Gewindehülse 22 gegenüber diesem Bund 18 gut verdreht werden kann, wenn die Spannbewegung oder auch die Lösebewegung durchgeführt wird.

Es sei noch erwähnt, daß bei beiden Ausführungsformen der Befestigungsvorsprung 5 und damit die Haltezungen 7 stirnseitig nach innen greifende Klauen 23 oder ähnliche Halteelemente zum besseren Erfassen des länglichen Körpers oder Kabels 2 und gleichzeitig zum Abstützen einer innenliegenden Dichtung, im Ausführungsbeispiel einer Dichtungsmanschette 24 aufweisen. Somit kann diese Dichtung 24 innenseitig festgelegt und mit an das Kabel 2 angedrückt werden, bleibt aber auch in entspannter Lage und Vormontagestellung unverlierbar und ferner können sich die erwähnten Klauen 23 etwas in eine elastische Oberfläche eines Kabels 2, Schlauches oder auch in die Wellentäler eines Wellschlauches eingraben oder einfügen.

Die Anschlußarmatur 1 dient zum Befestigen von länglichen Körpern, beispielsweise von Kabeln 2, Schläuchen, Rohren, Wellschläuchen oder dergleichen, an einer Öffnung 3, insbesondere auch zum Hindurchführen durch eine solche Öffnung 3 unter gleichzeitiger Festlegung, wobei es sich bei der Öffnung 3 um eine Lochung, eine Bohrung oder einen sonstigen Durchbruch in einer Wandung 4, zum Beispiel eines Gehäuses, handeln kann. Die Anschlußarmatur 1 ist dabei als Steckarmatur ausgebildet, das heißt durch axiales Einschieben in die Öffnung 3 wird sie bereits an dieser fixiert. Sie weist dazu einen durch axiale Schlitze in Haltezungen unterteilten Befestigungsvorsprung 5 auf, der außenseitig radial vorstehende Haltevorsprünge 8 trägt, die beim Einschieben des Befestigungsvorsprunges 5 in die Öffnung 3 hinter deren Rand 3a gelangen, wobei sie bei diesem Einschieben etwas radial nach innen ausweichen und nach dem Hindurchstecken sich selbsttätig wieder radial nach außen bewegen. Durch eine Axialbewegung der Anschlußarmatur 1 entgegen ihrer Einsteckrichtung können die Haltezungen 7 wiederum in radialer Richtung gegen den festzulegenden länglichen Körper oder ein Kabel 2 hin verformt und an diesem angeklemmt werden. Dabei ist an der Außenseite der Öffnung 3 ein Anschlag 9 vorgesehen, womit die Anschlußarmatur 1 außenseitig abgestützt wird. Die den Anschlag 9 aufweisende Hülse hat einen sich axial in die Öffnung 3 erstreckenden Stutzen 11, der in Montagestellung an einem Teilbereich der Außenseite der Haltezungen 7 des Befestigungsvorsprunges 5 angreift und bei einer Axialbewegung des Befestigungsvorsprunges 5 und seiner Haltezungen 7 einen konischen oder sich verjüngenden Bereich dieser Haltezungen 7 außenseitig derart beaufschlagt, daß die Haltezungen 7 in radialer Richtung zusammengedrückt werden, so daß eine Berührung der Haltezungen 7 mit dem hintergriffenen Rand 3a vermieden oder allenfalls mit einer erheblich geringeren Kraft erfolgt, als sie zum radialen Verformen der Haltezungen 7 aufgebracht wird.

## Patentansprüche

1. Anschlußarmatur (1) zum Befestigen von länglichen Körpern, beispielsweise von Kabeln (2), Schläuchen, Rohren, Wellschläuchen oder dergleichen, an einer Öffnung (3), insbesondere an einem Durchbruch oder einer Lochung in einer Wandung (4) eines Gehäuses oder dergleichen, wobei die Anschlußarmatur (1) einen in Einsteckrichtung axial vorstehenden Befestigungsvorsprung (5) aufweist, der durch im wesentlichen in axialer Richtungverlaufende Schlitze (6) in Haltezungen (7) aufgeteilt ist, an deren Außenseite radial nach außen vorstehende Haltevorsprünge (8) angeordnet sind, die beim Einschieben des Befestigungsvorsprunges (5) und seiner Haltezungen (7) in die Öffnung (3) hinter deren Rand (3a), diesen hintergreifend, in die Halteposition gelangen, wobei die Haltezungen (7) an ihren Haltevorsprüngen (8) in ihrem Anlagebereich eine sich in Einsteckrichtung erweiternde und demgemäß in Rückzugsrichtung verjüngende Form haben oder einen Konus bilden, so daß die Haltezungen (7) bei einer Axialbewegung der Anschlußarmatur (1) entgegen ihrer Einsteckrichtung in radialer Richtung verformbar sind und wobei mit Abstand zu den Haltevorsprüngen (8) eine einen Anschlag (9) aufweisende oder bildende Hülse (10) angeordnet ist, die an dem dem hintergriffenen Rand (3a) der Öffnung (3) gegenüberliegenden Öffnungsrand (3b) anliegt und zur Erzeugung einer Klemmkraft zwischen den Haltevorsprüngen (8) und diesem Anschlag (9) in axialer Richtung unter Verkleinerung des Abstandes zu den Haltevorsprüngen (8) verschiebbar ist, **dadurch gekennzeichnet, daß** die den Anschlag (9) aufweisende Hülse (10) einen sich von dem Anschlag (9) aus axial erstreckenden Stutzen (11) aufweist, der in Montagestellung an der Außenseite der Haltezungen (7) des Befestigungsvorsprunges (5) zwischen diesem und der Innenwandung der hintergriffenen Öffnung (3) verläuft und bei einer Axialbewegung des Befestigungsvorsprunges (5) und seiner Haltezungen (7) einen konischen oder sich verj üngenden Bereich dieser Haltezungen (7) beaufschlagt und **dadurch** zu deren radialer Zusammendrückung dient.

2. Anschlußarmatur nach Anspruch 1, **dadurch gekennzeichnet, daß** der Stutzen (11) durch die von ihm radial zusammendrückbaren Haltezungen (7) selbst radial aufweitbar und/oder in Montagestellung zumindest bereichsweise gegen die Innenwandung der Öffnung (3) andrückbar ist.

3. Anschlußarmatur nach Anspruch 1 oder 2, **dadurch gekennzeichnet, daß** der an der Anschlaghülse (10) in axialer Richtung vorspringende und in Montagestellung in die Öffnung (3) eingreifende Stutzen (11) durch axial verlaufende, insbesondere an der Stirnseite offene Schlitze (13) in einzelne Gleitzungen (14) aufgeteilt ist.

4. Anschlußarmatur nach einem der Ansprüche 1 bis 3, **dadurch gekennzeichnet, daß** der Stutzen (11) und/oder die ihn bildenden Gleitzungen (14) außenseitig vorsprungfrei sind.

5. Anschlußarmatur nach einem der Ansprüche 1 bis 4, **dadurch gekennzeichnet, daß** der Stutzen (11) in Vormontagestellung oder entspannter Lage innerhalb eines gedachten Hüllzylinders verläuft.

6. Anschlußarmatur nach einem der Ansprüche 1 bis 5, **dadurch gekennzeichnet, daß** der an der Anschlaghülse (10) befindliche Stutzen (11) in Ausgangsstellung der Klemmbewegung bis an die Haltevorsprünge (8) reicht und eine mit einer Schrägfläche der Haltevorsprünge (8) zusammenwirkende Einführschräge (15) aufweist.

7. Anschlußarmatur nach einem der Ansprüche 1 bis 6, **dadurch gekennzeichnet, daß** der Stutzen (11) eine axiale Abmessung hat, die der axialen Ausdehnung der von dem Befestigungsvorsprung durchsetzten Öffnung wenigstens zu einem über die Hälfte gehenden Bruchteil oder vollständig entspricht oder diese übertrifft.

8. Anschlußarmatur nach einem der Ansprüche 1 bis 7, **dadurch gekennzeichnet, daß** die Zahl der Schlitze (13) in dem Stutzen (11) der Zahl der Schlitze (6) und der Haltezungen (7) des Befestigungsvorsprunges (5) entspricht.

9. Anschlußarmatur nach einem der Ansprüche 1 bis 8, **dadurch gekennzeichnet, daß** die Schlitze (13) des Stutzens (11) und die Schlitze (6) des Befestigungsvorsprunges (5) in Montagestellung in Umfangsrichtung gegeneinander versetzt sind und daß an den Befestigungsvorsprüngen (8) Führungselemente oder Führungsleisten (12) oder dergleichen außenseitig angeordnet sind, die in Gebrauchsstellung in die Schlitze (13) des Stutzens (11) passen und zumindest bereichsweise eingreifen.

10. Anschlußarmatur nach einem der Ansprüche 1 bis 9, **dadurch gekennzeichnet, daß** der freie Rand des Stutzens (11) oder der ihn bildenden Gleitzungen (14) die Haltezungen (7) und/oder die Führungsleisten (12) außenseitig derart beaufschlagt und in radialer Richtung festlegt, daß ihr Außenumfang im Bereich des zu hintergreifenden oder hintergriffenen Randes (3a) der Öffnung (3) gleich oder insbesondere etwas kleiner als der Umfang dieses Randes (3a) ist und daß der Schrägungswinkel der Haltezungen (7) im Bereich des Stutzens (11) und/oder die Einführschräge (15) an diesem Stutzen einen derartigen Winkel haben, daß bei der Axialbewegung des Befestigungsvorsprunges (5) in Richtung auf diese Öffnung (3) hin die radiale Zusammendrückung der Haltezungen (7) so groß ist, daß sie weiterhin an dem hintergriffenen Rand (3a) der Öffnung (3) berührungsfrei oder zumindest im wesentlichen reibungsfrei bleiben.

11. Anschlußarmatur nach einem der Ansprüche 1 bis 10, **dadurch gekennzeichnet, daß** sie an ihrem dem Befestigungsvorsprung (5) abgewandten Bereich oder Rand ein radial vorstehendes Widerlager oder einen Bund (18) aufweist, der ein Widerlager für ein Spannelement bildet, das zwischen diesem Bund (18) und dem Anschlag (9) der Anschlaghülse (10) angeordnet ist und den Anschlag (9) und diesen Bund (18) in axialer Richtung auseinanderdrückt.

12. Anschlußarmatur nach einem der Ansprüche 1 bis 11, **dadurch gekennzeichnet, daß** das Spannelement zwischen Bund (18) und Anschlag (9) eine Feder, insbesondere eine Druckfeder (19), oder eine mit einem Außengewinde (20) an der Anschlaghülse (10) zusammenwirkende, zum Spannen von dem Anschlag (9) weg verdrehbare Gewindehülse (22) ist.

13. Anschlußarmatur nach einem der Ansprüche 1 bis 12, **dadurch gekennzeichnet, daß** der Anschlagbund (18) und der Befestigungsvorsprung (5) mit den Haltezungen (7) und Haltevorsprüngen (8) sowie gegebenenfalls an diesen angeordneten Führungsleisten (12) einstückig ist und insbesondere aus Kunststoff besteht.

14. Anschlußarmatur nach einem der Ansprüche 1 bis 13, **dadurch gekennzeichnet, daß** der Befestigungsvorsprung (5) stirnseitig nach innen greifende Klauen (23) oder dergleichen Halteelemente zum Erfassen des länglichen Körpers und/oder zum Abstützen einer innenliegenden Dichtung (24) aufweist.

15. Anschlußarmatur nach einem der vorstehenden Ansprüche, **dadurch gekennzeichnet, daß** in den Anschlag (9), von welchem der Stutzen (11) ausgeht, mit radialem Abstand zu diesem Stutzen (9) ein elastischer Ring, Dichtring oder O-Ring (16) angeordnet oder mit einem Teil seines Querschnittes in eine Ringnut (17) oder dergleichen Vertiefung eingefügt ist.

## Claims

1. Connecting fitting (1) for attaching elongate bodies, such as cables (2), hoses, pipes, corrugated hoses or the like, at an opening (3), particularly a breach or hole in a wall (4) of a housing or the like, wherein the connecting fitting (1) comprises a fixing projection (5) protruding axially in the direction of insertion, said projection being divided into retaining tongues (7) by substantially axially extending slots (6), on the outside of which are mounted radially outwardly protruding retaining projections (8), which on insertion of the fixing projection (5) and its retaining tongues (7) into the opening (3) behind the edge (3a) thereof, engaging behind the latter, move into the retaining position, the retaining tongues (7) having, on their retaining projections (8), in their contact region, a shape which widens out in the direction of insertion and accordingly tapers in the direction of withdrawal, or being conical in shape, so that the retaining tongues (7) are radially deformable during axial movement of the connecting fitting (1) counter to their direction of insertion, and at a spacing from the retaining projections (8) is mounted a sleeve (10) which comprises or forms an abutment (9), said sleeve abutting on the edge (3b) of the opening opposite the edge (3a) of the opening (3) behind which the projections engage, and being movable in order to generate a clamping force between the retaining projections (8) and this abutment (9) in the axial direction, while reducing the spacing from the retaining projections (8), **characterised in that** the sleeve (10) comprising the abutment (9) has a connection (11) extending axially outwards from the abutment (9), this sleeve extending, in the assembly position, on the outside of the retaining tongues (7) of the fixing projection (5), between the latter and the inner wall of the engaged opening (3), and during axial movement of the fixing projection (5) and its retaining tongues (7), acts on a conical or tapering region of these retaining tongues (7) and thereby serves to compress them radially.

2. Connecting fitting according to claim 1, **characterised in that** the connection (11) can be radially expanded by the very retaining tongues (7) which are radially compressible by it and/or it can be pressed at least partially against the inner wall of the opening (3) in the assembly position.

3. Connecting fitting according to claim 1 or 2, **characterised in that** the connection (11) protruding axially from the abutment sleeve (10) and engaging in the opening (3) in the assembly position is divided into individual sliding tongues (14) by axially extending slots (13) which are, in particular, open at their end face.

4. Connecting fitting according to one of claims 1 to 3, **characterised in that** the connection (11) and/or the sliding tongues (14) that form it are free from external projections.

5. Connecting fitting according to one of claims 1 to 4, **characterised in that** the connection (11) extends within an imaginary enveloping cylinder in the pre-assembled position or disconnected position.

6. Connecting fitting according to one of claims 1 to 5, **characterised in that** the connection (11) located on the abutment sleeve (10) extends up to the retaining projections (8) in the starting position of the clamping action and comprises an insertion slope (15) which interacts with an inclined surface of the retaining projections (8).

7. Connecting fitting according to one of claims 1 to 6, **characterised in that** the connection (11) has axial dimensions which correspond to all, or more than half, of the axial extent of the opening through which the fixing projection extends, or exceed it.

8. Connecting fitting according to one of claims 1 to 7, **characterised in that** the number of slots (13) in the connection (11) corresponds to the number of slots (6) and retaining tongues (7) of the fixing projection (5).

9. Connecting fitting according to one of claims 1 to 8, **characterised in that** the slots (13) of the connection (11) and the slots (6) of the fixing projection (5) in the assembly position are offset from one another in the circumferential direction and **in that** guide elements or guide strips (12) or the like which fit into the slots (13) of the connection (11) and at least partially engage therein in the position of use are mounted on the outside of the fixing projections (8).

10. Connecting fitting according to one of claims 1 to 9, **characterised in that** the free edge of the connection (11) or of the sliding tongues (14) that form it acts on the outside of the retaining tongues (7) and/or the guide strips (12) and secures them in the radial direction, such that their outer circumference in the region of the engaging or engaged edge (3a) of the opening (3) is equal to or, more particularly, somewhat less than the circumference of this edge (3a), and **in that** the angle of inclination of the retaining tongues (7) in the region of the connection (11) and/or the insertion slope (15) on this connection are at an angle such that during the axial movement of the fixing projection (5) towards this opening (3), the radial compression of the retaining tongues (7) is so great that they continue to be free from contact or at least substantially frictionless at the engaged edge (3a) of the opening (3).

11. Connecting fitting according to one of claims 1 to 10, **characterised in that** it comprises at its region or edge remote from the fixing projection (5) a radially protruding support or a flange (18) which forms a support for a tensioning element which is disposed between this flange (18) and the abutment (9) of the abutment sleeve (10) and which presses the abutment (9) and this flange (18) apart in the axial direction.

12. Connecting fitting according to one of claims 1 to 11, **characterised in that** the tensioning element between the flange (18) and the abutment (9) is a spring, particularly a compression spring (19), or a threaded sleeve (22) that co-operates with an external thread (20) on the abutment sleeve (10) and can be rotated away from the abutment (9) to produce tension.

13. Connecting fitting according to one of claims 1 to 12, **characterised in that** the abutment flange (18) and the fixing projection (5) are integrally attached to the retaining tongues (7) and retaining projections (8) and any guide strips (12) provided thereon, and are made of plastics, in particular.

14. Connecting fitting according to one of claims 1 to 13, **characterised in that** the fixing projection (5) comprises on its end face inwardly gripping claws (23) or similar retaining elements for gripping the elongate body and/or for supporting an internal gasket (24).

15. Connecting fitting according to one of the preceding claims, **characterised in that** an elastic ring, sealing ring or O-ring (16) is arranged in the abutment (9) from which the connection (11) extends, at a radial spacing from this connection (9), and part of its cross-section is inserted into an annular groove (17) or similar recess.

## Revendications

1. Dispositif de connexion (1) destiné à la fixation de corps allongés, par exemple des câbles (2), des tuyaux, des tubes, des guides d'ondes, ou analogues, à une ouverture (3), plus particulièrement à une traversée ou un trou pratiqué dans une cloison (4), un boîtier ou analogue, ce dispositif de connexion présentant une saillie de fixation (5) située axialement à l'avant dans la direction d'enfoncement, ladite saillie étant subdivisée en languettes (7) par des fentes (6) s'étendant en direction pratiquement axiale, et sur les faces extérieures desquelles sont situées des saillies de maintien (8) dépassant radialement vers l'extérieur, et qui, lors de l'insertion de la saillie de fixation (5) et de ses languettes (7) dans l'ouverture (3), derrière le rebord (3a), sont retenues par ce dernier en prenant leur position de maintien, les languettes de maintien (7), se dilatant à l'emplacement de leurs portions de maintien en saillie dans leur zone d'installation et, en conséquence, ayant une forme se rétrécissant ou formant un cône en direction de retrait, de sorte que les languettes de maintien (7), lors d'un déplacement axial du dispositif de connexion (1), sont déformables en direction radiale à l'opposé de leur direction d'introduction, tandis qu'à une certaine distance des saillies de maintien (8) est disposée une douille (10) comportant, ou formant, une butée (9) qui s'appuie sur le rebord (3b) situé à l'opposé du bord de retenue (3a) de l'ouverture (3), et qui, en vue d'obtenir une force de pincement entre les saillies de maintien (8) et cette butée (9), est déplaçable en direction axiale avec réduction de la distance aux saillies de maintien (8), **caractérisé en ce que** la douille (10) comportant la butée (9) présente un embout (11) s'étendant axialement depuis la butée (9) et qui, dans la position montée sur la face extérieure des languettes de maintien (7) de la saillie de fixation (5), se situe entre celle-ci et la paroi intérieure de l'ouverture (3) de retenue, et lors d'un déplacement axial de la saillie de fixation (5) et de ses languettes de maintien, (7) crée une zone conique, ou se rétrécissant, dans la région de ces languettes de maintien et, par suite sert à leur compression radiale les unes vers les autres.

2. Dispositif de connexion selon la revendication 1, **caractérisé en ce que** l'embout (11) peut être comprimé au moins localement contre la paroi intérieure de l'ouverture (3) par les languettes de maintien (7) compressibles radialement.les unes vers les autres, en étant lui-même dilatable radialement et/ou en position montée.

3. Dispositif de connexion selon l'une ou l'autre des revendications 1 ou 2, **caractérisé en ce que** l'embout (11) dépassant de la douille de butée (10) en direction axiale et s'accrochant dans l'ouverture (3) en position montée peut être subdivisé en languettes coulissantes individuelles (14) par des fentes s'étendant axialement (13) et plus particulièrement des fentes s'ouvrant dans la face frontale.

4. Dispositif de connexion selon l'une quelconque des revendications 1 à 3, **caractérisé en ce que** l'embout (11) et/ou les languettes coulissantes (14) qu'il forme sont dépourvus de saillies sur leur côté extérieur.

5. Dispositif de connexion selon l'une quelconque des revendications 1 à 4, **caractérisé en ce que** l'embout (11), en position de prémontage ou à l'état détendu, se déploie à l'intérieur d'une enveloppe virtuelle cylindrique.

6. Dispositif de connexion selon l'une quelconque des revendications 1 à 5, **caractérisé en ce que** l'embout (11) qui se trouve sur la douille de butée (10) en position de sortie du mouvement de pincement arrive jusqu'à la saillie de maintien (8) et présente un biseau d'introduction (15) coopérant avec une surface inclinée de la saillie de maintien (8).

7. Dispositif de connexion selon l'une quelconque des revendications 1 à 6, **caractérisé en ce que** l'embout (11) présente une dimension axiale qui correspond exactement à au moins la moitié de l'expansion axiale de l'ouverture traversant la saillie de fixation, ou qui la dépasse.

8. Dispositif selon l'une quelconque des revendications 1 à 7, **caractérisée en ce que** le nombre de fentes (13) pratiquées dans l'embout (11) correspond au nombre de fentes (6) et de languettes de maintien (7) de la saillie de fixation (5).

9. Dispositif de connexion selon l'une quelconque des revendications 1 à 8, **caractérisé en ce que** les fentes (13) de l'embout (11) et les fentes (6) de la saillie de fixation (5), à l'état monté, sont décalées l'une par rapport à l'autre en direction périphérique, et **en ce que** des éléments de guidage ou des déformations de guidage (12) ou analogues sont répartis sur le côté extérieur des saillies de fixation (8), et, en position d'utilisation, s'accrochent dans les fentes (13) de l'embout (11), et cela, au moins dans une certaine région.

10. Dispositif de connexion selon l'une quelconque des revendications 1 à 9, **caractérisé en ce que** le bord libre de l'embout (11) ou des languettes coulissantes (14) qui le forment rencontre le côté extérieur des languettes de maintien (7) et/ou les déformations de guidage (12), et le fixe en direction radiale d'une manière telle que sa périphérie extérieure, dans la région du bord (3a) de l'ouverture (3) qui va la retenir, ou l'a retenu, est égale ou plus particulièrement un peu plus petite que la périphérie de ce bord (3a) et **en ce que** la pente d'inclinaison des languettes de maintien (7) dans la région de l'embout (11) et/ou la pente d'introduction (15) sur cet embout forment un angle tel que, lors du déplacement axial de la saillie de fixation (5) dans la direction de cette ouverture (3), la compression radiale des languettes de maintien (7) les ramenant ensemble est élevée au point qu'elles demeurent en outre sur le bord de retenue (3a) de l'ouverture (3), sans contact ou au moins pratiquement sans frottement.

11. Dispositif de connexion selon l'une quelconque des revendications 1 à 10, **caractérisé en ce qu'**il présente, dans la région, ou au bord opposé à la saillie de fixation (5), un épaulement ou une collerette (18), dépassant radialement, qui constitue un appui pour un élément de mise sous tension qui est placé entre cet épaulement (18) et la butée (9) de la douille de butée (10), et qui repousse cet épaulement (18) en direction axiale.

12. Dispositif de connexion selon l'une quelconque des revendications 1 à 11, **caractérisé en ce que** l'élément de mise sous tension situé entre l'épaulement (18) et la butée (9) consiste en un ressort, plus particulièrement un ressort de compression (19), ou en une douille filetée rotative (22), coopérant avec un filetage extérieur (20) de la douille de butée (10), en vue de l'écarter de la butée (9).

13. Dispositif de connexion selon l'une quelconque des revendications 1 à 12, **caractérisé en ce que** l'épaulement d'appui (18) et la saillie de fixation (5) sont réalisés en une seule pièce, plus particulièrement en matière plastique avec les languettes de maintien (7) et les saillies de maintien (8), ainsi qu'éventuellement les déformations de guidage (12) pratiquées sur celles-ci.

14. Dispositif de connexion selon l'une quelconque des revendications 1 à 13, **caractérisé en ce que** la saillie de fixation (5) présente, sur sa face frontale, des griffes d'accrochage orientées vers l'intérieur (23), ou des éléments analogues de maintien, en vue de saisir le corps longitudinal et/ou de retenir une garniture (24) située intérieurement.

15. Dispositif de connexion selon l'une quelconque des revendications précédentes, **caractérisé en ce que**, dans la butée (9), d'où sort l'embout (11), est disposée, à une certaine distance de cet embout (11), une bague élastique, une bague d'étanchéité, ou une bague du type O-ring (16), ou bien y est logée avec une portion de sa section dans une rainure annulaire (17) ou évidement analogue.
